# EUROPEAN PATENT APPLICATION

(11) **EP 1 008 305 A1**
(43) Date of publication of application: **14.06.2000**
(21) Application number: 98123554.2
(22) Date of filing: 10.12.1998
(51) Int. Cl.: A23L 1/035, A23L 1/22, A23L 1/227, A23L 1/231

(54) **An aroma product comprising saturated C16 and C18 monoglycerides**

(71) Applicant: SOCIETE DES PRODUITS NESTLE S.A., 1800 Vevey (CH)
(72) Inventor: Vauthey, Sylvain, 1110 Morges (CH); Leser, Martin, 1054 Morrens (CH); Milo, Christian, 1006 Lausanne (CH)
(74) Representative: Thomas, Alain

(57) **Abstract**

The invention concerns an aroma product comprising flavoring compounds , obtainable through a process comprising :
- dissolving in water amino acids, peptides or hydrolized proteins and reducing sugars or dissolving in water aroma precursors,
- introducing in said solution a monoglyceride,which is a saturated compound in C16 and C18,
- heating the obtained mixture to have a mesomorphic phase structure or a microemulsion,
- maintaining said heating to develop flavoring compounds
- and cooling said mixture.

## Description

The present invention concerns an aroma product comprising flavoring compounds and the use of said aroma product.

The Maillard reaction is well known in the food area as being a non enzymatic browning. This type of reaction is of primary importance in food industry since it is one of the most important routes to production of flavour, taste and color in cooked food. This type of reaction occurs in a mixture where amino acids together with reducing sugars are heated and react together to give a very broad range of compounds : this range can be as large as comprising near to 200 different compounds. In the food technology, it is already known to induce a Maillard reaction for the production of a certain range of aroma compounds. The US Patent No. 4'466'986 for example concerns a process for the production of a flavoring agent resembling in taste meat, fish or mushrooms, wherein a liquid protein hydrolysate is reacted with at least one monosaccharide by heating. The reaction is carried out in water. The problem with this type of reaction in purely aqueous medium is that firstly the yield of the reaction is not very high and secondly it is not possible to obtain a very broad range of aroma compounds.

Furthermore, it is possible to obtain through thermal degradation of aroma precursors flavor compounds. The problem with this type of reaction is the same as for the Maillard reaction, that is, firstly the yield of the thermal reaction is not very high and secondly it is not possible to obtain a very broad range of aroma compounds.

The aim of the present invention is to have the possibility of inducing a Maillard reaction or a degradation of aroma precursors, that is thermal reaction flavors, wherein the yield of the obtained aroma compounds is greater than in the aqueous phase and wherein the range of these compounds is larger. Furthermore, the obtained aroma product has an increased stability at room temperature.

The invention concerns an aroma product comprising flavoring compounds , obtainable through a process comprising :
- dissolving in water amino acids, peptides or hydrolized proteins and reducing sugars or dissolving in water aroma precursors,
- introducing in said solution a monoglyceride,which is a saturated compound in C16 and C18,
- heating the obtained mixture to have a mesomorphic phase structure or a microemulsion,
- maintaining said heating to develop flavoring compounds
- and cooling said mixture.

In the case of a mixture of amino acids, peptides or hydrolized proteins and reducing sugars, it is the Maillard reaction which takes place. In the case of aroma precursors, it is a thermal degradation which takes place.

The mesomorphic phase which is obtained is preferably a cubic phase.

It is known that cubic phase can be used to solubilize large amount of hydrophilic, hydrophobic and amphiphilic molecules without significantly changing the main rheological properties. Moreover, their inherent high viscosity, as well as a three-dimensional structure with well-defined water channels, makes cubic phases attractive as potential delivery system to provide sustained release of volatile compounds in air.

Instead of using the cubic phase to solubilize guest molecules, it has been found according to the present invention that flavoring compounds are directly generated in the mesophase. Thus, the cubic phases play the role of an active matrix where the aroma is created at a defined time in the final product by heating and then released in a controlled way. The cubic phases are an innovative tool to manage flavour generation pathways since this particular structure is able to compartmentalize and concentrate the potential precursors and final flavoring compounds.

It is important to use according to the invention a monoglyceride, which is substantially saturated and with a carbon chain between 16 and 18. The monoglyceride used is normally a 100 % saturated C16 compound or a 100 % saturated C18 compound or a mixture of both. It is also possible to work with a saturated monoglyceride comprising molecules outside this chain length, but in this case the amount of non-C16 or C18 compounds must not exceed 20 %. It is furthermore possible to have a certain amount of unsaturated compounds. As above mentioned, in this case the amount of unsaturated compounds must not exceed 20 %. All the percentages given in the present specification are in weight.

In the technique, it is known that a Maillard reaction takes place at a temperature comprised between 80 to 150 °C. By considering a phase diagram with different monoglycerides, it has been stated that the use of an unsaturated monoglyceride decreases the cubic to hexagonal phase transition temperature , which drops below 100 °C : so that it is not possible at such a temperature to induce a real efficient Maillard reaction. This is the reason why we use according to the present invention substantially saturated monoglyceride in C16 and/or C18. In this case, the phase diagram increases the cubic to hexagonal phase transition temperature to a range where an efficient Maillard reaction is induced. The cubic phase region occurs from about 80 to 120 °C.

In the case of a thermal degradation, the aroma precursors used are normally thiamine.

The used monoglycerides are normally solid at room temperature. It is therefore necessary to dissolve said monoglycerides at a temperature around 60 °C in the solution of both types of the reaction compounds precursors.

One possible mechanism which leads to the remarkable rate enhancement is compartmentalization of the reactants (amino acids, peptides or hydrolyzed proteins and reducing sugars or aroma precursors) at the monoglyceride-water interface or close to it, thus inducing a concentration gradient. Therefore, due to locally high concentration of amino acids, peptides or hydrolyzed proteins and reducing sugars or aroma precursors, the chemical reactions are strongly accelerated leading to higher yields of key odorant molecules or even new volatile compounds which are normally not detected in bulk water.

The amino acids are taken in the group consisting of cystein, methionine, glycine,glutathione and and monosodium glutamate, the proteins in the group consisting of milk proteins, soy proteins, cereal proteins, vegetable proteins and meat proteins.The peptides are taken from the same group as the proteins or synthetized peptides.

The reducing sugars are taken in the group consisting of ribose, xylose, glucose, fructose, rhamnose and galacturonic acid.

By considering the phase diagram with the monoglyceride, which is the better for the high yield of flavoring compounds, it is preferred to have in the reaction mixture an amount of monoglyceride comprised between 60 and 80 %, an amount of amino acids, proteins, peptides and reducing sugars comprised between 0.1 and 5 % and an amount of aroma precursors comprised between 0.1 and 5 %, the remaining being water. The amount of water in the mixture is preferably around 20 %.

According to the invention, the heating of the mixture is carried out at a temperature comprised between 80 and 180 °C during 1 to 6 hours. Systems of the Maillard reaction are often studied at higher temperature (around 140-180 °C) and shorter time (10-20 minutes). It is preferred to carry out the heating at a temperature around 100 °C during 4 hours, because of the necessity to stay in the cubic phase region and to avoid the use of pressurizable reaction vessels.

During the Maillard reaction, the presence of the monoglyceride in the cubic phase allows the Maillard reaction compounds to be then encapsulated, in such a manner that said compounds have a controlled release.

It has been found that according to the invention, it is possible to obtain ten times more certain Maillard compounds.

For the thermal reaction of the aroma precursors, the heating is carried out at the same temperature range as for the Maillard reaction, that is between 80 and 180 °C during 1 to 6 hours.

There is no criticality in the cooling step. This cooling can be carried out at room temperature.

The present invention concerns further the use of the aroma product comprising flavoring compounds, wherein 0.1 to 5 % of the aroma product is mixed with a food taken in the group consisting of bouillons, soup sauces, gravies, pet food, snacks and canned food.

The mixing of the aroma product can be carried out by different ways. It is possible to add directly the aroma product in the food. It is also possible to prepare a dispersion in an aqueous medium and then make the mixing. Finally, it is possible to make a drying, by way of spray drying and then add a powder to the food.

The following of the specification is now made in relation with the example.

### Example

2 mmol of cysteine and 2 mmol of ribose were dissolved in 10 ml of phosphate buffer (0.5 mol/l) at pH 5.0. The cubic phase was prepared by introducing 1 g of this solution and 4 g of melted (60°C) monoglyceride (product of the Company Danisco sold under the trade mark Dimodan PV) into a Pyrex tube. After vigorous stirring, the tube was placed in an oil bath at 140 °C for 1 minute and stirred again to form an homogeneous cubic phase. Finally, the cubic phase was thermally treated for 4 hours at 100 °C.

This thermally treated sample is then compared with a reference comprising the same amount of the reactant, but without the monoglyceride : this reference is called aqueous system in the following of the specification.

The sensory properties of the reaction flavour of the aqueous system with that of the cubic phase were compared by an untrained technical sensory panel. The reaction carried out in the cubic phase was found to have an overall more intense flavour with a strong rubber, eggy, roast chicken-like aroma. The aroma of the aqueous reaction was evaluated after transforming the solution into a cubic phase system in order to have similar volatile-matrix interactions. This mixture was then described as weak in an aroma reminiscent of meat and lard with some burnt character.

The volatiles formed in the cubic phase compared to those in water were monitored by gas chromatography.

The following table gives the amount of products generated from the ribose and cysteine solubilized in the cubic phase and in the water system.

| Component | Cubic phase (µg) | Water (µg) |
|---|---|---|
| 2-Methyl-3-furanthiol (MFT) | 18.4 | n.d. |
| 2-Methyl-3(2H)-furanone | 36.7 | 13.1 |
| Furfural | 874.3 | 351.0 |
| Furfurylthiol | 12.0 | trace |
| 3-Mercapto-2-pentanone | trace | n.d. |
| Norfuraneol | 698.1 | 291.1 |

The present table shows drastic differences between the two samples indicating a much higher generation of sulfur compounds in the cubic system. The results show a significant increase in the concentration of furfurylthiol in the cubic phase compared to the water system in which only trace amounts were detected. At the same time, the potent odorant 2-methyl-3-furanthiol was only detected in the cubic phase system.

Besides MET also its potential precursors furfural and norfuraneol were favored in the cubic phase, being formed 2.5 fold higher amounts.

## Claims

1. An aroma product comprising flavoring compounds , obtainable through a process comprising :
- dissolving in water amino acids, peptides or hydrolized proteins and reducing sugars or dissolving in water aroma precursors,
- introducing in said solution a monoglyceride,which is a saturated compound in C16 and C18,
- heating the obtained mixture to have a mesomorphic phase structure or a microemulsion,
- maintaining said heating to develop flavoring compounds
- and cooling said mixture.

2. An aroma product according to claim 1, wherein the mesomorphic phase is a cubic phase.

3. An aroma product according to claims 1 or 2, wherein the amino acids are taken in the group consisting of cystein, methionine, glycine,glutathione and and monosodium glutamate, the proteins in the group consisting of milk proteins, soy proteins, cereal proteins, vegetable proteins and meat proteins.

4. An aroma product according to any of claims 1 to 3, wherein the sugars are taken in the group consisting of ribose, xylose, glucose, fructose, rhamnose and galacturonic acid.

5. An aroma product according to any of claims 1 to 4, wherein the monoglyceride is present in an amount comprised between 60 and 80 %, the amino acids, the proteins, the peptides and the sugars in an amount comprised between 1 and 5 % and the aroma precursors in an amount comprised between 0.1 and 5 %, the remaining being water.

6. An aroma product according to any of claims 1 to 5, wherein the heating of the mixture is carried out at a temperature comprised between 80 and 180 °C during 1 to 6 hours.

7. An aroma product according to claim 6, wherein the heating of the mixture is carried out at a temperature of 100 °C during 4 hours.

8. The use of the aroma product according to any of claims 1 to 7, wherein 0.1 to 5 % of the aroma product is mixed with a food taken in the group consisting of bouillons, soup, sauces, gravies, petfood, snacks and canned food.
